(19) Europäisches Patentamt
European Patent Office
Office européen des brevets

(11) **EP 2 859 428 B1**

(12) **FASCICULE DE BREVET EUROPEEN**

(45) Date de publication et mention de la délivrance du brevet:
**04.05.2016 Bulletin 2016/18**

(21) Numéro de dépôt: **13730144.6**

(22) Date de dépôt: **05.06.2013**

(51) Int Cl.:
***G06F 3/01*** *(2006.01)*

(86) Numéro de dépôt international:
**PCT/EP2013/061616**

(87) Numéro de publication internationale:
**WO 2013/182611 (12.12.2013 Gazette 2013/50)**

(54) **INTERFACE DE STIMULATION TACTILE PAR RETOURNEMENT TEMPOREL**

TAKTILE STIMULATIONSSCHNITTSTELLE MIT ZEITUMKEHR

TIME-REVERSAL TACTILE STIMULATION INTERFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2012 FR 1255286**

(43) Date de publication de la demande:
**15.04.2015 Bulletin 2015/16**

(73) Titulaire: **Commissariat à l'Énergie Atomique et aux Énergies Alternatives 75015 Paris (FR)**

(72) Inventeurs:
• **HUDIN, Charles F-75014 Paris (FR)**
• **HAYWARD, Vincent F-75013 Paris (FR)**
• **LOZADA, José Calle Madrid SI N Y Via a Lumbisi (EC)**
• **WIERTLEWSKI, Michael Evanston, Illinois 60202 (US)**

(74) Mandataire: **Brevalex 95, rue d'Amsterdam 75378 Paris Cedex 8 (FR)**

(56) Documents cités:
**EP-A1- 2 381 338     EP-A2- 2 372 505
US-A1- 2011 267 294     US-A1- 2011 304 581**

**Description**

**DOMAINE TECHNIQUE ET ART ANTÉRIEUR**

La présente invention se rapporte à une interface de stimulation tactile par retournement temporel, permettant l'affichage de stimuli tactiles de formes et de dimensions variables.

Une interface de stimulation tactile est destinée à restituer une information tactile, telle qu'une texture, un relief, une rugosité variable dans le temps et/ou l'espace.

De telles interfaces sont utilisées par exemple dans le domaine des interfaces homme-machines. Elles peuvent également être utilisées dans les domaines de l'optique, de l'acoustique, de la chimie, et de la fabrication automatisée...

Afin de réaliser une telle interface tactile permettant d'afficher un motif tactile, il est couramment utilisé une matrice d'actionneurs, chaque actionneur imposant directement à la surface de la peau un déplacement normal ou tangentiel, statique ou dynamique. La résolution de telles interfaces est limitée par la dimension des actionneurs. En outre, ces interfaces sont encombrantes et nécessitent un grand nombre d'actionneurs proportionnellement à la surface tactile explorée, chacun correspondant à un pixel tactile. Enfin, la présence de ces actionneurs sous la surface à explorer rend l'interface opaque, ce qui ne permet pas de la superposer à un écran. Une telle interface est par exemple décrite dans le document Benali-Khoudja, M. Hafez, J. M. Alexandre, and A. Kheddar, 2004. Tactile interfaces: a state of the art survey. Proc. International Symposium on Robotics.

Dans d'autres interfaces, la surface à explorer vibre tangentiellement en fonction de la position du contact par rapport au motif. On peut alors donner l'illusion de bordures et de textures en modulant le cisaillement en fonction de la position du doigt sur la surface. L'ensemble de la plaque a le même mouvement, il n'est pas possible de stimuler différemment plusieurs doigts : deux doigts explorant la surface recevront le même stimulus.

Le document "Impact localization combined with haptic feedback for touch panel applications based on the time-reversal approach", M. R. Bai and Y. K, Tsai, 2011 - The Journal of the Acoustical Society of America, 129(3), 1297-1305 décrit une interface utilisant le procédé de retournement temporel pour propager des ondes acoustiques dans une plaque de verre et réaliser une interface de stimulation tactile.

Le procédé de retournement temporel consiste à concentrer une énergie acoustique en un emplacement donné. Ce procédé est utilisé par exemple pour la destruction de tumeur ou la destruction d'engin explosif, tel qu'une mine.

L'interface de stimulation tactile propageant des ondes acoustiques dans une plaque de verre épaisse, par exemple d'épaisseur supérieure à 1mm, présente plusieurs inconvénients. La vitesse des ondes dans le verre est élevée, de l'ordre de 1500 m/s. Ainsi, pour obtenir une tâche de focalisation de l'ordre du cm, des fréquences de l'ordre de 150 kHz sont requises. Pour obtenir un déplacement suffisant pour être perçu, des puissances très élevées sont nécessaires. Enfin, la rigidité en flexion d'une plaque de verre de 2 mm est trop grande pour pouvoir obtenir un déplacement suffisant pour être tactilement utile. Par exemple ce document mentionne des déplacements de 2 $\mu$m, pour une tâche de focalisation de 3 cm de large.

Le document US2010/0225596 décrit une interface tactile comportant une membrane en élastomère tendue sur un cadre comportant des actionneurs piézoélectrique et générant des ondes stationnaires dans la membrane. Cette interface ne permet pas de générer des stimuli localisés dans le temps et dans l'espace.

Le document EP2372505 décrit un dispositif d'interaction avec une surface tactile qui est en contact avec un actionneur, ladite surface étant fixée sur un cadre sur lequel au moins un actionneur est placé, ledit actionneur émettant un signal à la fréquence de résonance de l'ensemble surface-cadre, avec le but de générer une réponse tactile dans la surface.

Le document EP2381338 décrit un dispositif portable avec une surface tactile qui émet une réponse tactile en réponse à la détection d'un événement tactile sur la surface du dispositif.

**EXPOSÉ DE L'INVENTION**

C'est par conséquent un but de la présente invention d'offrir une interface de stimulation tactile présentant une bonne résolution spatiale et une bonne résolution temporelle et offrant de grands déplacements pouvant être détectés tactilement.

C'est un but supplémentaire de la présente invention d'offrir une interface tactile permettant de générer des motifs de forme complexe, tels que des contours d'image.

Les buts précédemment énoncés sont atteints par une interface de stimulation tactile mettant en oeuvre un procédé de retournement temporel, ladite interface comportant un élément dont au moins une face est destinée à délivrer une stimulation tactile, des actionneurs aptes à émettre des signaux pour propager une onde acoustique dans l'élément d'interface, ledit élément étant formé par une surface souple, les signaux appliqués à la surface étant déterminés par le procédé de retournement temporel.

L'élément dans lequel les ondes acoustiques se propagent étant souple les ondes acoustiques s'y propagent suffisamment lentement pour atteindre des longueurs d'ondes suffisamment courtes à des fréquences basses améliorant la focalisation à des résolutions compatibles avec la stimulation tactile. Les surfaces souples permettent d'obtenir de faibles rayons de courbure et donc des grands déplacements à courte longueur d'onde.

Les actionneurs peuvent être déportés sur un cadre supportant la surface tactile. Les stimuli générés par les ondes acoustiques, sont indépendants de la position du doigt, ce qui permet une exploration multi-digitale de la surface. Les stimuli peuvent être répétés par exemple avec une fréquence de l'ordre de 100 Hz, au cours du temps et modulés en amplitude. Ces stimuli peuvent se situer à tout emplacement sur la surface, focalisés en un point ou décrivant le contour d'une forme.

Puisque les actionneurs peuvent être situés sur le bord de l'élément d'interface, l'élément peut être transparent et être appliqué sur un écran.

La surface tactile est par exemple formée par un film en matériau polymère, en matériau composite, une plaque de verre mince dont l'épaisseur est de l'ordre de 100 $\mu$m, ou un écran souple.

En d'autres termes, l'invention porte sur un stimulateur apte à créer des déformations modifiables dans une surface pour afficher un relief ou des vibrations localisées perceptibles tactilement et pouvant évoluer au cours du temps. Il comporte une surface sollicitée par un ou plusieurs actionneurs. Ces actionneurs exercent sur cette surface des efforts calculés selon le procédé de retournement temporel. Ce procédé permet la focalisation d'une onde acoustique en un ou plusieurs points ou lignes de la surface, donnant naissance à un pic d'amplitude perceptible et localisé dans le temps et dans l'espace. Ce stimulateur tactile dynamique permet une exploration de la surface avec plusieurs doigts ou parties de la main, telles que la paume.

La présente invention a alors pour objet une interface de stimulation tactile comportant un élément destiné à être exploré tactilement par un opérateur, ledit élément destiné à être exploré tactilement étant formé par au moins une surface, au moins un actionneur destiné à appliquer un effort sur ladite surface, et des moyens de commande dudit au moins un actionneur, lesdits moyens de commande étant destinés à envoyer à l'actionneur des signaux correspondant aux efforts à appliquer à ladite surface en fonction de la stimulation tactile à générer sur la surface, lesdits efforts étant déterminés par un procédé de retournement temporel, ladite surface comportant au moins une zone telle que :

$$\frac{c^3(\lambda)}{\rho\lambda} < 10^{13} \quad \forall \lambda \geq 2cm$$

- $\lambda$ étant la longueur d'onde des ondes de flexion se propageant dans ladite zone,
- c étant la vitesse des ondes de flexion,
- $\rho$ étant la masse par unité de surface de ladite zone, et

ledit au moins un actionneur ayant une bande passante s'étendant entre 1 Hz et 20 kHz de sorte à exciter un grand nombre de modes propres de ladite surface.

Dans un exemple avantageux, l'interface comporte au moins un support formant un cadre maintenant la surface, ledit actionneur étant situé à proximité du cadre.

Dans un exemple, l'actionneur peut appliquer un effort directement à la surface, perpendiculairement à celle-ci. Dans un autre exemple, l'actionneur applique un effort directement sur le support.

Dans un exemple de réalisation, l'interface comporte un support en forme de cadre auquel la surface est suspendue, au moins un premier et un deuxième actionneur, le premier actionneur appliquant un effort directement sur la surface et le deuxième actionneur appliquant un effort sur le support.

Dans un autre exemple de réalisation, la surface délimite un volume fermé rempli d'un fluide sous pression, ladite surface étant tendue par le fluide sous pression, ladite interface comportant un support dudit volume fermé et au moins un actionneur monté sur le support.

Dans une réalisation avantageuse, l'interface, comporte au moins un capteur d'un paramètre apte à influencer l'effet des efforts sur la surface.

L'interface peut également comporter au moins un capteur de détection de la présence de l'opérateur en contact avec l'interface.

L'actionneur est par exemple un actionneur électromagnétique. L'actionneur peut comporter une bobine, un noyau en fer doux et un aimant, ledit aimant étant fixé sur la surface et la bobine étant fixée sur le support.

En variante, l'actionneur est en matériau piézoélectrique. L'actionneur peut alors comporter une poutre dont une extrémité est encastrée dans le support et l'autre extrémité est destinée à venir appliquer un effort sur la surface.

Selon une autre caractéristique, la surface peut être munie de picots destinés à entrer en contact avec l'opérateur.

Selon une autre caractéristique, la surface peut comporter au moins deux matériaux et/ou deux phases différentes.

Dans une réalisation avantageuse, la surface est transparente.

Par exemple, la surface comporte au moins un film en matériau polymère, en matériau composite. Celle-ci peut alors être tendue sur le support.

Dans un autre exemple, la surface comporte au moins une plaque de verre d'épaisseur d'environ 100 $\mu$m.

Les moyens de commande peuvent comporter une base modale ou une base des réponses impulsionnelles. La base de réponses impulsionnelles peut contenir des signaux à transmettre à l'actionneur, lesdits signaux ayant été déterminés par le procédé de retournement temporel.

La base modale peut comporter une unité de détermination des signaux à transmettre à l'actionneur par le procédé de retournement temporel.

Les moyens de commande peuvent comporter un contrôleur d'actionneurs transmettant lesdits signaux audits actionneurs.

De préférence, la vitesse des ondes de flexion est de l'ordre de 50 m/s.

**BRÈVE DESCRIPTION DES DESSINS**

La présente invention sera mieux comprise à l'aide de la description qui va suivre et des dessins sur lesquels :

- la figure 1A est une vue de dessus d'un exemple de réalisation d'une interface de stimulation tactile,
- la figure 1B est une vue en coupe de la figure 1A selon le plan A-A,
- la figure 1C est une vue de détail de la figure 1B au niveau d'un actionneur,
- la figure 2 est une vue en coupe d'un autre exemple de réalisation d'une interface de stimulation tactile, la surface tactile portant des picots,
- la figure 3 est un autre exemple d'interface de stimulation tactile mettant en oeuvre un actionneur de type poutre encastrée,
- les figures 4A et 4B sont des représentations schématiques de différents exemples de l'interface tactile selon l'invention,
- les figures 4C et 4D sont des représentations schématiques de différents exemples de l'interface tactile selon l'invention, la surface délimitant un volume fermé rempli d'un gaz sous pression,
- les figures 5A à 5L sont des vues de dessus d'une interface tactile dans différents états de fonctionnement pour focaliser un point à la surface de la surface,
- les figures 6A à 6L sont des vues de dessus d'une interface tactile dans différents états de fonctionnement pour focaliser un triangle à la surface de la surface,
- les figures 7A à 7C sont des vues en coupe de différents exemples de surface pouvant être mis en oeuvre dans l'interface selon l'invention,
- les figures 8A et 8B sont des vues de dessus et en coupe longitudinale d'un autre exemple de réalisation d'une interface tactile selon l'invention,
- la figure 9 est une représentation schématique d'un exemple de commande d'une interface de stimulation tactile selon l'invention,
- la figure 10 est une vue de dessus d'un exemple d'interface et des représentations graphique du déplacement de différents points de l'interface pendant 1 seconde.

**EXPOSÉ DÉTAILLÉ DE MODES DE RÉALISATION PARTICULIERS**

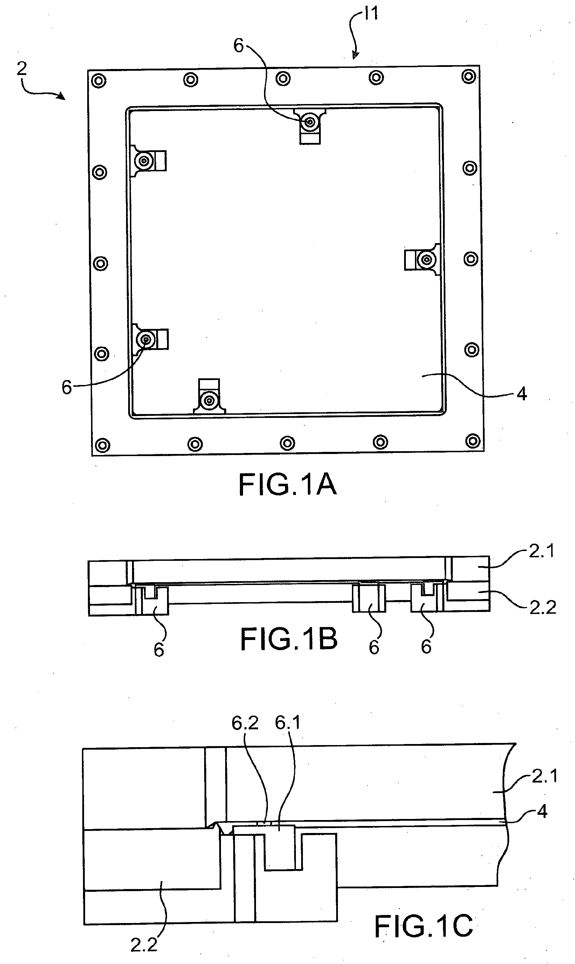

Sur les figures 1A à 1C, on peut voir un premier exemple de réalisation d'une interface tactile selon l'invention.

L'interface tactile I1 comporte un cadre 2, un élément muni d'une surface souple 4 maintenue sur le cadre 2 et des actionneurs 6 fixés sur le cadre et aptes à appliquer une contrainte mécanique à la surface 4, la contrainte étant orientée transversalement par rapport à la surface. La partie suspendue de la surface 4 forme une surface destinée à être explorée tactilement.

Les actionneurs 6 sont montés sur les bords intérieurs du cadre de sorte à agir sur les contours de la surface 4. Dans l'exemple représenté, les actionneurs sont montés sur des pattes fixées sur le cadre inférieur 2.2.

Le cadre 2 comporte un cadre supérieur 2.1 portant la surface et un cadre inférieur 2.2 sur lequel sont montés les actionneurs. La surface 4 est maintenue entre le cadre inférieur 2.2 et le cadre supérieur 2.1.

La surface 4 est destinée à être le siège d'ondes de flexion ou ondes transversales générées par les contraintes appliquées par les actionneurs. Selon l'invention, les ondes de flexion sont focalisées de sorte à produire une stimulation tactile au point de focalisation.

La surface 4 est réalisée en un ou plusieurs matériaux tels que :

$$\frac{c^3(\lambda)}{\rho\lambda} < 10^{13} \quad \forall \lambda \geq 2cm$$

(I)

où :

- $\lambda$ est la longueur d'onde des ondes se propageant dans cette zone. Par exemple, pour obtenir une résolution de l'ordre de la taille du contact entre le doigt et la surface, on utilise des longueurs d'ondes supérieures ou égales à 2 cm ;
- c est la vitesse des ondes de flexion, qui dépend éventuellement de $\lambda$.

A titre d'exemple, pour un matériau homogène et isotrope, la vitesse de propagation des ondes de flexion c vaut :

$$c = \sqrt{\frac{T + \frac{Eh^3}{12(1-v^2)}\left(\frac{2\pi}{\lambda}\right)^2}{\rho}}$$

T est la tension appliquée à la surface, E est le module d'Young du matériau, h son épaisseur, $\rho$ est la masse par unité de surface, v est le coefficient de poisson du matériau et $\lambda$ la longueur d'onde.

Pour obtenir des longueurs d'onde de 2 cm à une fréquence inférieure à 20 kHz, la vitesse de propagation maximale est :

c = $\lambda$.f = 0,02×20000 = 400 m/s.

Dans l'exemple d'une membrane en Mylar® tendue, on obtient des vitesses de propagation de l'ordre de 50 m/s.

$\rho$ est la masse par unité de surface de la zone de stimulation. Pour une surface homogène et mono-matériau, celle-ci dépend de la masse volumique du matériau $\rho_v$, et de son épaisseur h, soit $\rho = \rho_v*h$. Pour une membrane de Mylar® de 125 $\mu$m d'épaisseur, on obtient $\rho = 0{,}175 kg/m^2$.

La surface tactile est par exemple formée par un film en matériau polymère, par exemple en Mylar®, par un film en matériau composite, par une plaque de verre mince par exemple d'épaisseur de l'ordre de 100 $\mu$m, ou directement par un écran souple.

La surface peut comporter différentes zones présentant chacune une masse par unité de surfaces différente, néanmoins chaque zone est telle qu'elle remplit le critère (I).

La dimension de la tâche de focalisation étant liée à la plus petite longueur d'onde focalisée $\lambda_{min}$ par la relation I = $\lambda_{min}$/2, pour construire une tâche de dimension I = 1cm, on génère des ondes de longueurs d'ondes supérieures et égales à $\lambda_{min}$ = 2 cm.

La fréquence étant liée à la longueur d'onde par la relation $f_{max}$ = c/$\lambda_{min}$, les actionneurs choisis pour exciter la surface présentent alors une bande passante allant de quelques hertz à $f_{max}$. Ces actionneurs ne sont donc pas sélectionnés pour exciter certains modes, mais tous les modes dont la fréquence est contenue dans la bande passante [1Hz ; $f_{max}$], soit [1Hz ; c/$\lambda_{min}$] = [1Hz ; 2c/l] où c est la vitesse de propagation des ondes vérifiant la relation (I). On obtient ainsi une bande passante de l'ordre de [1 Hz ; 20 kHz]. Cette bande passante peut ainsi inclure jusqu'à plusieurs centaines de modes propres de la structure.

En pratique, cela recouvre plusieurs centaines de modes. Le ou les actionneurs sont donc choisis pour présenter une bande passante couvrant l'ensemble des fréquences de ces modes. De préférence, le ou les actionneurs sont choisis de sorte à pouvoir exciter la surface à des fréquences comprises entre [1 Hz et 20 kHz].

Sur les figures 1B et 1C, on peut voir plus en détail un exemple d'actionneurs pouvant être mis en oeuvre dans l'interface tactile, i.e. offrant une bande passante suffisamment large pour mobiliser un grand nombre de modes propres de la surface.

Dans l'exemple représenté, il s'agit d'actionneurs électromagnétiques comportant une bobine 6.1 en cuivre, un noyau en fer doux et un aimant 6.2, ce dernier étant fixé sur la face inférieure de la surface 4. L'alimentation électrique de la bobine 6.1 génère un champ magnétique à travers le noyau en fer doux qui agit sur l'aimant. Un effort normal au plan de la surface est ainsi généré.

En variante, les actionneurs peuvent être piézoélectriques. Dans ce cas l'actionneur en se déformant par application d'une tension applique un effort normal à la surface.

Dans l'exemple représenté, l'interface comporte cinq actionneurs, cependant ce nombre n'est pas limitatif. On peut par exemple prévoir 1, 10 ou plusieurs dizaines d'actionneurs, par exemple 40, répartis sur le support 2.

Les efforts appliqués par les actionneurs 6 sur la surface 4 sont calculés par un procédé de retournement temporel, ce qui permet aux actionneurs de générées des ondes progressives constructives en un ou plusieurs point(s) donnés de la surface et à un instant souhaité. L'utilisateur ressent, non pas le passage d'une onde progressive mais l'amplitude atteinte au(x) point(s) et à l'instant souhaité due à l'interférence constructive. Le gain des actionneurs est réglé de sorte que l'amplitude partout ailleurs soit inférieure au seuil de sensibilité tactile. Le seuil de sensibilité tactile désigne la plus faible amplitude vibratoire perceptible. Il dépend des conditions de contact et de la fréquence mais se situe autour de 10 $\mu$m. On peut donc amplifier ou atténuer le déplacement de la surface de sorte que seule l'amplitude atteinte aux points de focalisation soit supérieure à ce seuil et donc perceptible. La surface semble ainsi immobile excepté aux points de focalisation.

De manière avantageuse, l'interface peut comporter un ou plusieurs capteurs. Par exemple, il peut s'agir d'un capteur de température de l'environnement dans lequel se trouve l'interface. En effet la température peut modifier la vitesse de propagation des ondes dans la surface. Cette information de température peut donc servir à corriger les signaux envoyés aux actionneurs pour tenir compte de cette modification de vitesse de propagation.

Des capteurs détectant la présence des doigts de l'opérateur sur l'interface peuvent également être mis en oeuvre, ce qui permet de ne générer une stimulation tactile que dans les zones en cours d'exploration par les doigts. La consommation électrique de l'interface peut alors être réduite ce qui est particulièrement intéressant dans le cas d'interfaces de stimulation tactile appliquées à des appareils portables. Il peut s'agir par exemple de capteurs optiques.

Nous allons décrire brièvement le principe du procédé de retournement temporel.

Le principe du retournement temporel des ondes repose sur l'invariance de l'équation de propagation d'ondes par renversement du temps.

Soit un actionneur exerçant une force impulsionnelle en un point I. Soit un capteur situé au point $A_n$ de la surface et enregistrant au cours du temps le déplacement hors du plan de ce point. Soit $h_{Ani}(t)$ avec $0<t<T$, le déplacement enregistré au point An pendant une durée T lorsqu'une force impulsionnelle est exercée au point I au temps ta=0. Le principe de réciprocité indique qu'on a alors $h_{IAn}(t)=h_{AnI}(t)$ : émetteur et récepteur peuvent ainsi être interchangés sans modifier le signal enregistré.

Si on remplace au point An le capteur par un actionneur exerçant une force $F(t)=h_{AnI}(T-t)$, c'est-à-dire la réponse impulsionnelle réémise en partant de sa fin. Alors on enregistrera en un point J le signal suivant :

$$s_n(t) = h_{AnI}(T-t) \otimes h_{JAn}(t) = \int_{-\infty}^{\infty} h_{AnI}(T-u).h_{JAn}(t-u)\,du$$

u est une variable d'intégration qui est utilisée dans le calcul mais n'a pas de sens physique.

Si J et t sont quelconques, $h_{AnI}(T-t)$ et $h_{JAn}(t)$ sont décorrélés, ils interfèrent de façon non constructive, résultant en un bruit de fond de moyenne nulle.

Si J=I et t=T, on a alors, grâce au principe de réciprocité :

$$s_n(T) = \int_{-\infty}^{\infty} h_{AnI}(T-u).h_{IAn}(T-u)\,du = \int_{-\infty}^{\infty} h_{AnI}(T-u)^2\,du$$

L'interférence est alors constructive, résultant en une amplitude beaucoup plus élevée qu'aux autres points.

Le contraste est alors défini comme le rapport entre le déplacement au point de focalisation au temps T et l'écart type de ce déplacement en un point quelconque.

Dans le cas où N actionneurs sont utilisés, leurs contributions s'additionnent pour donner :

$$s(t) = \sum_{n=1}^{N} s_n(t)$$

Le contraste est proportionnel à la durée T de la fenêtre de retournement temporel et à la racine du nombre N d'actionneurs :

$$C \propto T\sqrt{N}$$

En pratique, la durée T peut être limitée par l'amortissement des vibrations, on utilise alors de préférence plusieurs actionneurs pour atteindre le contraste voulu.

La fréquence maximale des signaux définie la résolution maximale atteignable par la relation :

$$\lambda_{min} = \frac{c}{f_{max}}$$

La largeur minimale du point de focalisation est de l'ordre de λ/2.

Les réponses impulsionnelles $h_{Anl}(t)$ peuvent être obtenues soit de façon expérimentale en enregistrant effectivement les réponses impulsionnelles, soit par stimulation ou encore de manière analytique lorsque la géométrie reste simple.

On peut répéter la même expérience avec un actionneur en I et plusieurs capteurs. Ensuite, en inversant les capteurs et l'actionneur, on peut générer des ondes acoustiques constructives au point I à un instant souhaité.

Selon l'invention, en mettant en oeuvre une surface suffisamment souple telle que définie ci-dessus, comme support pour la propagation d'ondes acoustiques, les ondes acoustiques s'y propagent suffisamment lentement, à une vitesse de l'ordre de 50 m/s, pour atteindre des longueurs d'ondes suffisamment courtes à des fréquences basses, par exemple inférieures à 10 kHz, ce qui permet d'améliorer la focalisation à des résolutions compatibles avec la stimulation tactile. La surface souple permet en outre d'obtenir des rayons de courbure et donc de grands déplacements à courte longueur d'onde. Grâce à l'invention, l'interface de stimulation tactile par retournement temporel présente une bonne résolution spatiale et une bonne résolution temporelle.

Les signaux envoyés aux actionneurs sont calculés selon le procédé de retournement temporel et dérivés soit de mesures expérimentales, soit de stimulations. La durée des efforts appliqués à la surface est variable, par exemple de l'ordre de 10 ms, selon le motif à focaliser et le contraste souhaité, et les efforts peuvent être répétés à fréquence et amplitude voulue. Le contraste et l'amplitude obtenus au point de focalisation dépendent de la dimension de l'interface, de l'amortissement des vibrations et du nombre d'actionneurs. Le nombre d'actionneurs peut être choisi en fonction de l'interface.

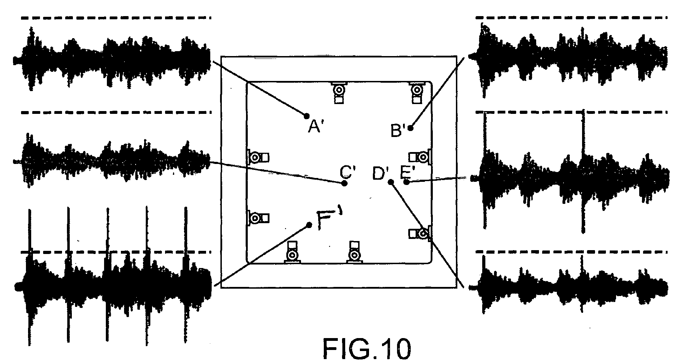

Sur la figure 10, on peut voir une vue de dessus de l'interface munie d'une surface 4 maintenue sur un support 2 et d'actionneurs 6, et la représentation graphique du déplacement de six points de la surface A', B', C', D', E', F' pendant 1 seconde.

Seuls les points E' et F' sont focalisés, la focalisation étant répétée à deux fréquences différentes (2Hz en E', 5Hz en F'). Seul le « bruit de fond » apparaît au niveau des points A', B', C', D'. Le trait en pointillés représente le seuil de perception tactile. Un déplacement d'amplitude plus faible que ce seuil n'est pas perceptible tactilement. Ainsi seuls les points E' et F' sont stimulés tactilement, et le déplacement de la surface aux points A', B', C', D' n'est pas perceptible tactilement. On peut donc amplifier ou atténuer le déplacement de la surface de la surface de sorte que seuls l'amplitude atteinte aux points de focalisation soit perceptible.

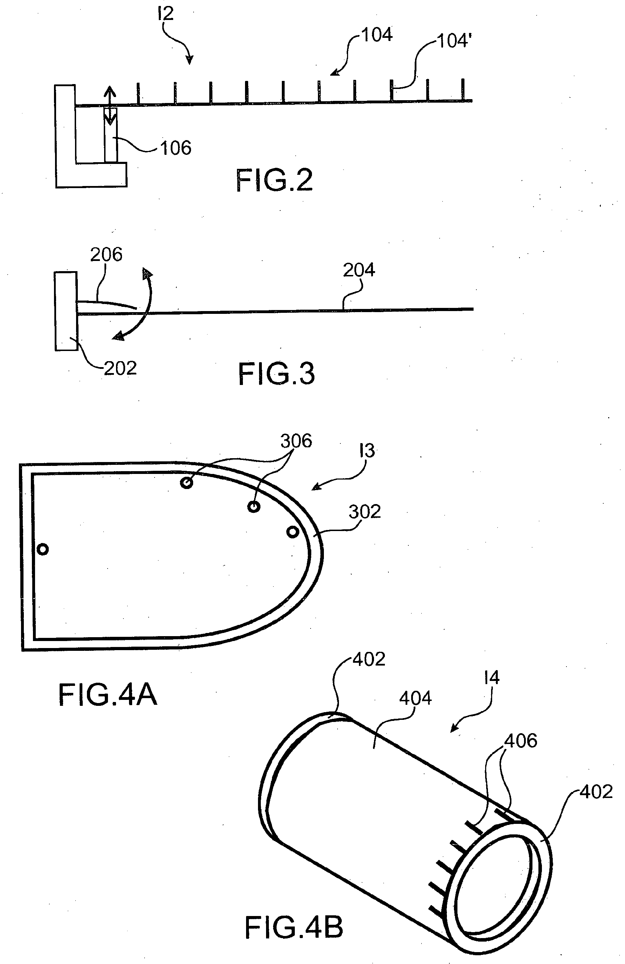

Sur la figure 2, on peut voir un autre exemple d'interface dans lequel l'élément d'interface comporte une surface 104 munie de picots 104' faisant saillie de la face avec laquelle l'opérateur entre en contact. Les actionneurs 106 sont des actionneurs piézoélectriques dans l'exemple représenté.

Sur la figure 3, on peut voir un autre exemple de réalisation d'interface 13 munie d'un actionneur piézoélectrique 206 de type "bender", i.e. il est formé d'une poudre encastrée par une extrémité longitudinale dans le support 202 et lorsqu'il est déformé, il se déforme en flexion pour entrer en contact avec la surface et appliquer un effort sur la surface 204.

Sur les figures 4A et 4B, on peut voir d'autres exemples de réalisation d'interface tactile 13, 14 selon l'invention.

Sur la figure 4A, le support 302 présente une forme d'ogive, les actionneurs 306 étant situés près du cadre.

Sur la figure 4B, l'interface 14 à la forme d'un cylindre de révolution, la surface 404 étant tendue entre deux cadres 402 en forme d'anneau. Les actionneurs 406 sont de type "bender" comme représenté sur la figure 3.

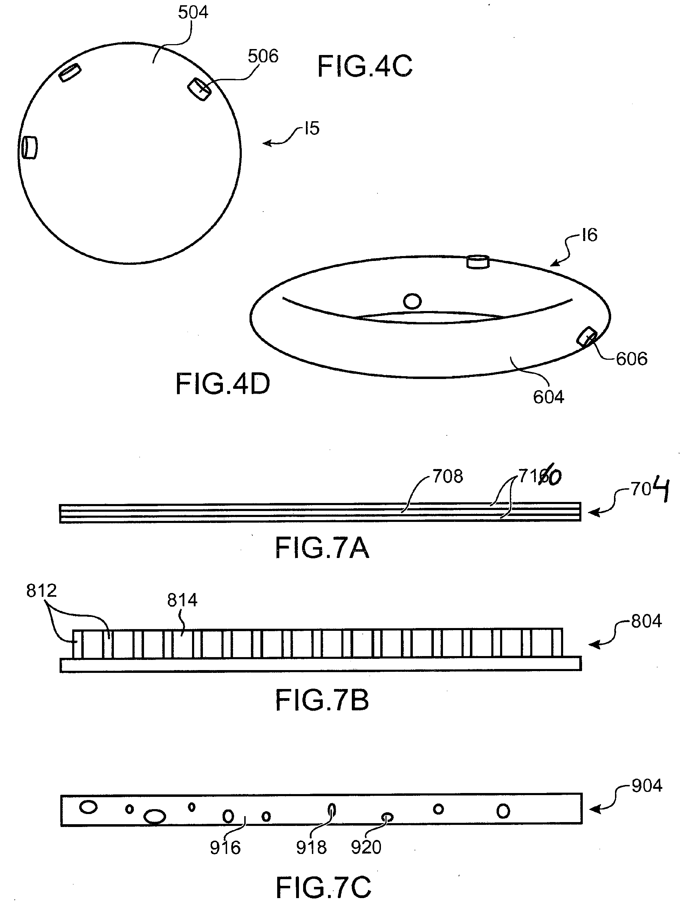

Sur les figures 4C et 4D, on peut voir des interfaces tactiles I5, I6 selon un autre exemple de réalisation de l'invention. Ces interfaces I5, I6 diffèrent de celles précédemment décrites en ce que les surfaces 504, 604 sont tendues non pas sur un cadre mais au moyen d'un fluide sous pression. Sur la figure 4C, la surface 504 délimite un volume fermé en forme de sphère rempli d'un fluide sous pression et sur la figure 4D, la surface 604 délimite un volume fermé en forme d'anneau rempli d'un fluide sous pression. Les actionneurs 506, 606 sont répartis à l'extérieur du volume et sont aptes à exercer un effort normal à la surface 504, 604. La disposition des actionneurs 506, 606 est montrée uniquement à titre d'illustration.

Par exemple, le volume fermé peut être monté sur un support sur lequel les actionneurs sont également disposés, les actionneurs appliquant des efforts à la surface pour produire des stimulations tactiles en différents points de la surface.

Sur les figures 7A à 7C, on peut voir plusieurs exemples de réalisation de surfaces 704, 804, 904 assurant un ralentissement de la progression des ondes acoustiques de sorte à avoir une vitesse de propagation des ondes acoustiques dans la surface suffisamment lente afin d'obtenir une focalisation à des résolutions suffisantes compatibles avec la stimulation tactile. Dans les exemples représentés, les surfaces sont réalisées en plusieurs matériaux et/ou plusieurs phases. En associant plusieurs matériaux et/ou plusieurs phases on peut atteindre :

$$\frac{c^3(\lambda)}{\rho\lambda} < 10^{13} \quad \forall \lambda \geq 2cm$$

Sur la figure 7A, la surface 704 comporte un liquide 708 confiné entre deux feuilles 710, le liquide 708 permet d'alourdir la surface sans en augmenter la raideur et permet ainsi de diminuer la vitesse de propagation des ondes transverses. Ces feuilles peuvent être faites de matériaux polymères, de verre mince ou autre, et le liquide peut être de l'eau, une huile ou un gel par exemple.

Sur la figure 7B, la surface 804 comporte des picots rigides 812 noyés ou non dans un matériau élastique 814. Deux élastomères de raideurs différentes peuvent être utilisés par exemple.

Sur la figure 7C, la surface 904 comporte une structure en un premier matériau 916 et des cavités 918 dans la structure remplies avec un deuxième matériau 920. On peut ainsi utiliser par exemple un polymère chargé, afin d'en modifier la densité.

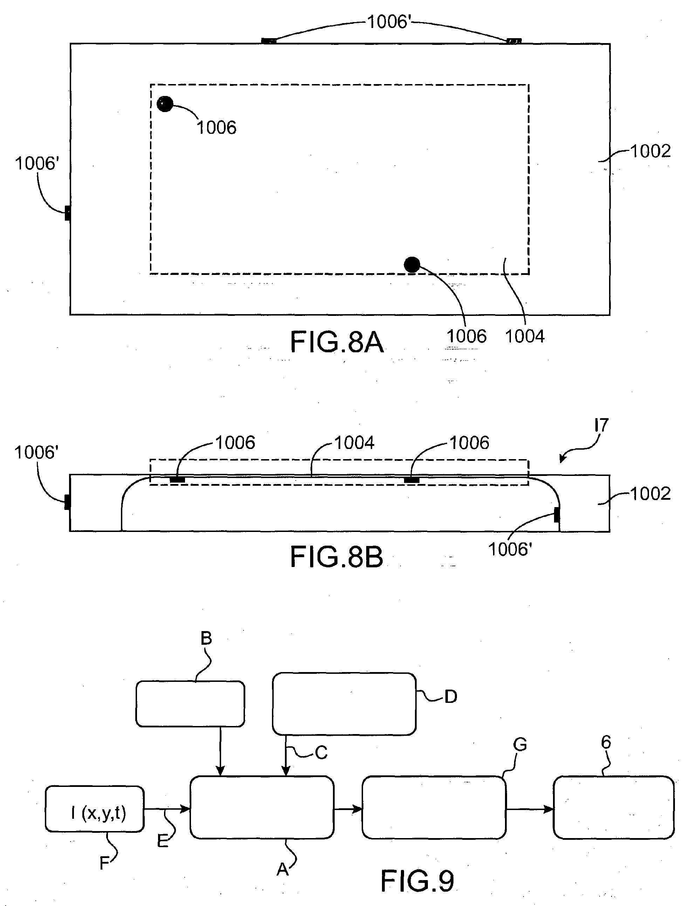

Sur les figures 8A et 8B, on peut voir un autre exemple de réalisation d'interface 17, dans lequel des actionneurs 1006 appliquent directement un effort sur la surface et des actionneurs 1006' n'appliquent pas directement leur effort sur la surface mais sur le support 1002.

Dans l'exemple représenté le support 1002 et la surface 1004 sont réalisés en une seule pièce, le support 1002 présentant une épaisseur plus grande que celle de la surface pour offrir une certaine rigidité mais ceci n'est en aucun cas limitatif.

Comme on peut le voir dans cet exemple de réalisation les actionneurs 1006' appliquent un effort parallèle à la surface.

Les efforts appliqués par les actionneurs sur le support ne sont pas nécessairement parallèles à la surface mais peuvent être perpendiculaires à celle-ci, voir avoir une direction formant un angle compris entre 0 et 90° avec la surface.

Nous allons maintenant décrire deux commandes des actionneurs de l'interface tactile selon l'invention.

Sur la figure 9, on peut voir une représentation schématique d'une commande.

La commande comporte une unité de détermination A des signaux d'actionnement à envoyer aux actionneurs, une base modale ou une base de réponse impulsionnelle B, une connexion C aux capteurs D qui peuvent être mis en oeuvre et une connexion E à un module F fournissant l'image à afficher sur l'interface, i.e. la stimulation tactile à générer sur la surface et un contrôleur d'actionneur G qui adresse les signaux calculés par le l'unité de détermination A à chaque actionneur et réalise une amplification de puissance des signaux avant l'envoie aux actionneurs.

La base de réponses impulsionnelles B est une base de données comportant les efforts à appliquer à la surface qui ont été calculés par le procédé de retournement temporel.

La base modale forme une base de données de l'allure spatiale $\phi_n$ (x, y) d'un nombre N donné de modes propres de la surface souple lorsqu'elle est actionnée directement. Dans le cas d'une excitation sur le cadre, il s'agit alors des modes de l'ensemble surface souple et cadre. Ainsi que leurs fréquences $\omega_n$. Les signaux à envoyer à l'actionneur ou aux actionneurs sont calculés lors du fonctionnement de l'interface par le procédé de retournement temporel.

Le module F commande l'affichage d'un ou plusieurs points ou d'un contour à un instant t0, avec une amplitude donnée. I(x, y, t) désigne l'amplitude souhaitée au point de coordonnées (x, y) à l'instant t. Par exemple, dans le cas d'une interface rapportée sur un écran de téléphone portable ou de tablette numérique, le module peut être relié à la commande de l'affichage sur l'écran.

Comme indiqué ci-dessus, l'interface peut être en outre équipée d'un capteur de température D de détection qui fournit des informations pouvant modifiées les signaux de commande transmis aux actionneurs.

Le calcul des signaux de commande des actionneurs se fait à partir de l'image à afficher, de la base modale ou de la base des réponses impulsionnelles et des signaux envoyés par les capteurs. A titre d'exemple, le signal $s_q(t)$ calculé pour l'actionneur q situé en $(x_q, y_q)$, pour une image I(x, y) souhaitée à l'instant $t_0$ est le suivant, selon que l'on travaille à partir de la base modale $\phi_n$, $\omega_n$ ou à partir d'une base de réponses impulsionnelles h respectivement.

A partir de la base modale :

$$s_q(t) = \sum_{n=1}^{N} \widetilde{\phi_n}(x_q, y_q) \iint_S \widetilde{\phi_n}(x, y) . I(x, y, t_0) dx dy . \cos\left(\widetilde{\omega_n}(T - t + t_0)\right)$$

A partir de la base de réponses impulsionnelles :

$$s_q(t) = \sum_{p=1}^{p} I(x_p, y_p, t_0) . h_q(x_p, h_p, T - t + t_0)$$

$$t_0 - T < t < t_0$$

$\widetilde{\phi}_n$ et $\widetilde{\omega}_n$ dépendent de la base modale $\phi_n$, $\omega_n$ ainsi que des grandeurs fournies par les capteurs. T est soit une constante, soit calculée en fonction des paramètres d'entrée de l'unité de calcul. $h_q(x_p, y_p)$ est la réponse impulsionnelle entre l'actionneur q et le point de la surface situé en $(x_p, y_p)$. Ce calcul peut toutefois être implémenté de façon différente. Le signal ainsi calculé peut ensuite subir plusieurs transformations du type, amplification, filtrage, répétition ou autre.

Grâce à l'invention et au choix de la surface, il est possible de former des tâches de focalisation dont la dimension est de l'ordre du cm.

De manière avantageuse, la mise en oeuvre du procédé de retournement temporel permet de déporter les actionneurs sur le bord de la surface. Ainsi, en utilisant une surface en matériau transparent, l'interface tactile peut avantageusement être superposée à un écran, la commande de la stimulation étant alors associée à l'affichage sur l'écran.

Grâce à l'invention, les actionneurs peuvent être de puissance réduite. En effet, tous les actionneurs peuvent contribués à la génération d'un stimulus en un point en se focalisant tous en ce point. A l'inverse, dans les interfaces tactiles du type à matrice d'actionneurs de l'état de la technique, chaque actionneur contribue à générer un stimulus tactile en un point et les autres actionneurs ne peuvent contribuer à la génération de ce stimulus. Cette puissance réduite permet d'utiliser des actionneurs de taille réduite.

En outre, grâce à l'invention il est possible de créer des stimuli tactiles en différents points de la surface simultanément, en additionnant les signaux correspondants à chacun des points. Si on considère les signaux $s_a(t)$ et $s_b(t)$ émis par un actionneur pour focaliser aux points a et b respectivement. Pour focaliser au même instant en a et b, l'actionneur est commandé pour émettre un signal $s(t)=s_a(t)+s_b(t)$. Ainsi un opérateur posant plusieurs doigts sur l'interface selon l'invention peut ressentir un stimulus différent sur chaque doigt.

La possibilité de créer plusieurs points de focalisation simultanément autorise la génération de reliefs complexes tels que les contours d'une image. Les impulsions générées localement peuvent être répétées à la fréquence voulue et modulées en amplitude, d'où une grande richesse de l'information tactile transmise.

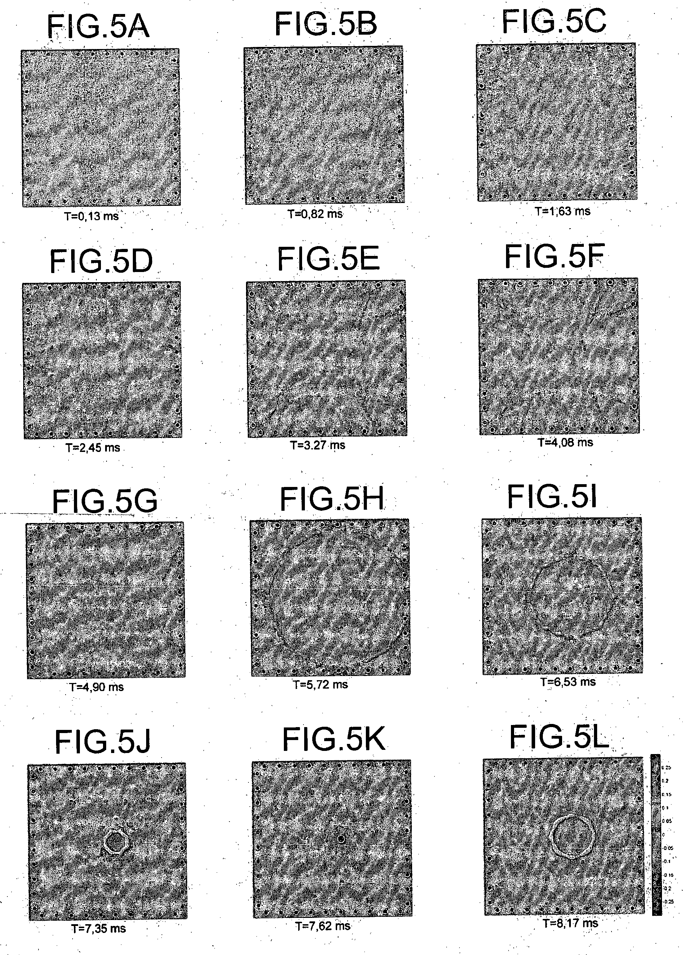

Sur les figures 5A à 5L, on peut voir la surface d'une interface tactile selon l'invention dans différents états pris par la surface au cours de la génération d'un stimulus tactile en un point de la surface, pour cela les ondes acoustiques générées par les actionneurs sont focalisées en ce point. Sur la figure 5K, l'interface tactile est dans son état de génération d'un stimulus tactile en un point.

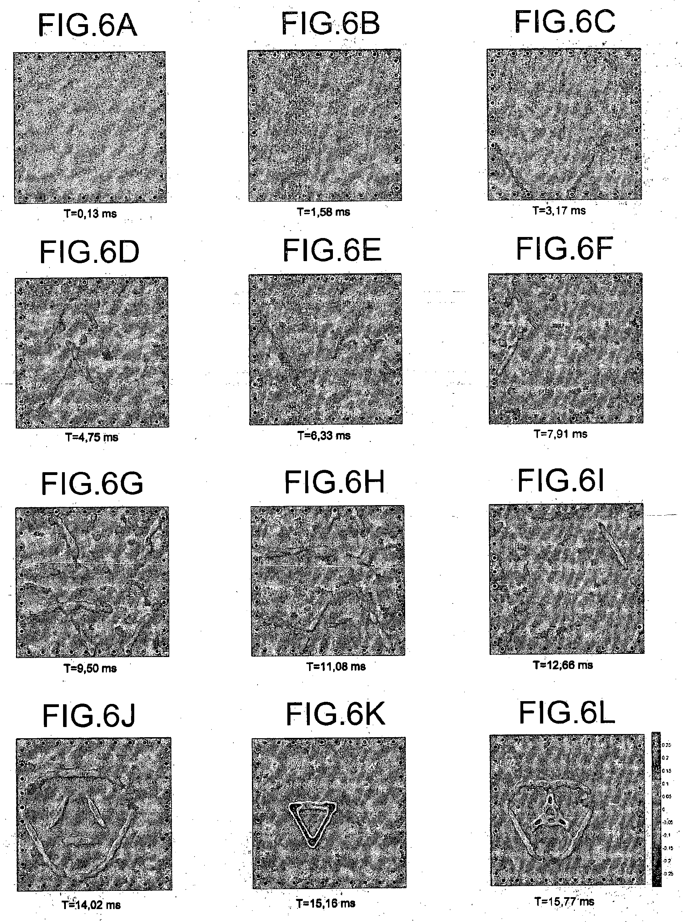

Sur les figures 6A à 6L, on peut voir la surface d'une interface tactile selon l'invention dans différents états pris par la surface au cours de la génération d'un stimulus tactile en forme de triangle. Sur la figure 6K, l'interface tactile est dans son état de génération du stimulus tactile en forme de triangle.

Comme expliqué ci-dessus, un seul actionneur peut focaliser plusieurs points ou une ligne, une ligne étant construite en la décomposant en une somme de points. Chaque actionneur contribue à la création de cet ensemble de points et peut donc créer un motif sur la surface souple.

La mise en oeuvre de plusieurs actionneurs focalisant les mêmes points permet d'améliorer le contraste obtenu.

Les actionneurs peuvent être situés sur le cadre et agir sur le contour de la surface mais également agir sur une zone plus centrale de la surface.

La présente invention peut être mise en oeuvre dans les interfaces homme-machine tactiles, telle que :

- les écrans tactiles dans l'électronique grand public, les téléphones, les liseurs, les tablettes tactiles, etc. ;
- les écrans tactiles de grande dimension pour l'exploration de données, les simulateurs, etc. ;
- les cockpits en automobile, en l'aviation, dans la marine ;
- les dispositifs d'intervention chirurgicaux, les sondes, les systèmes robotisés ;
- les moyens d'accès à l'information pour pallier les handicaps sensoriels et moteurs.

La présente invention peut être mise en oeuvre dans le domaine optique : dans les systèmes de balayage de faisceaux, par exemple dans les projecteurs d'images, dans le domaine de l'optique adaptative.

La présente invention peut être mise en oeuvre dans le domaine de l'acoustique, par exemple dans les lentilles acoustiques.

**Revendications**

1. Interface de stimulation tactile comportant un élément destiné à être exploré tactilement par un opérateur, ledit élément destiné à être exploré tactilement étant formé par au moins une surface, au moins un actionneur (6, 1006, 1006') destiné à appliquer un effort sur ladite surface, et des moyens de commande dudit au moins un actionneur, lesdits moyens de commande étant destinés à envoyer à l'actionrieur (6, 1006, 1006') des signaux correspondant aux efforts à appliquer à ladite surface (4, 1004) en fonction de la stimulation tactile à générer sur la surface, dans laquelle lesdits efforts sont déterminés par un procédé de retournement temporel, ladite surface (4, 1004) comportant au moins une zone telle que :

$$\frac{c^3(\lambda)}{\rho\lambda} < 10^{13} \quad \forall \lambda \geq 2cm$$

   - λ étant la longueur d'onde des ondes de flexion se propageant dans ladite zone,
   - c étant la vitesse des ondes de flexion,
   - p étant la masse par unité de surface de ladite zone, et

   dans laquelle ledit au moins un actionneur (6, 1006, 1006') a une bande passante s'étendant entre 1 Hz et 20 kHz de sorte à exciter un grand nombre de modes propres de ladite surface (4, 1004).

2. Interface de stimulation tactile selon la revendication 1, comportant au moins un support (2, 1002) formant un cadre maintenant la surface, ledit actionneur (6, 1006, 1006') étant situé à proximité du cadre, l'actionneur (6) appliquant avantageusement un effort directement à la surface, perpendiculairement à celle-ci ou l'actionneur (1006') appliquant avantageusement un effort directement sur le support (1002).

3. Interface de stimulation tactile selon la revendication 1, comportant un support (1002) en forme de cadre auquel la surface (1004) est suspendue, au moins un premier et un deuxième actionneur, le premier actionneur (1006) appliquant un effort directement sur la surface (1004) et le deuxième actionneur (1006') appliquant un effort sur le support (1002).

4. Interface de stimulation tactile selon la revendication 1, dans laquelle la surface délimite un volume fermé rempli d'un fluide sous pression, ladite surface étant tendue par le fluide sous pression, ladite interface comportant un support dudit volume fermé et au moins un actionneur monté sur le support.

5. Interface de stimulation tactile selon l'une des revendications 1 à 4, comportant au moins un capteur d'un paramètre apte à influencer l'effet des efforts sur la surface et/ou au moins un capteur de détection de la présence de l'opérateur en contact avec l'interface.

6. Interface de stimulation tactile selon l'une des revendications 1 à 5, dans laquelle l'actionneur (6) est un actionneur électromagnétique.

7. Interface de stimulation tactile selon la revendication 6 en combinaison avec l'une des revendications 2 à 4 dans laquelle l'actionneur (6) comporte une bobine (6.1), un noyau en fer doux et un aimant, ledit aimant (6.2) étant fixé sur la surface et la bobine 6.1) étant fixée sur le support.

8. Interface de stimulation tactile selon l'une des revendications 1 à 5, dans laquelle l'actionneur est en matériau piézoélectrique, l'actionneur comportant une poutre dont une extrémité est encastrée dans le support et l'autre extrémité est destinée à venir appliquer un effort sur la surface.

9. Interface de stimulation tactile selon l'une des revendications 1 à 8, dans laquelle la surface est munie de picots destinés à entrer en contact avec l'opérateur et/ou dans laquelle la surface comporte au moins deux matériaux et/ou deux phases différentes.

10. Interface de stimulation tactile selon l'une des revendications 1 à 9, dans laquelle la surface est transparente.

11. Interface de stimulation tactile l'une des revendications 1 à 10, dans laquelle la surface comporte au moins un film en matériau polymère, en matériau composite, l'interface comportant un support sur lequel la surface est tendue.

12. Interface de stimulation tactile selon l'une des revendications 1 à 10, dans laquelle la surface comporte au moins une plaque de verre d'épaisseur d'environ 100 $\mu$m,

13. Interface de stimulation tactile selon l'une des revendications 1 à 12, dans laquelle les moyens de commande comportent une base modale ou une base des réponses impulsionnelles, la base de réponses impulsionnelles contentant des signaux à transmettre à l'actionneur (6, 1006, 1006'), lesdits signaux ayant été déterminés par le procédé de retournement temporel ou la base modal comportant une unité de détermination (A) des signaux à transmettre à l'actionneur (6, 1006, 1006') par le procédé de retournement temporel.

14. Interface de stimulation tactile selon l'une des revendications 1 à 13, dans laquelle les moyens de commande comportent un contrôleur d'actionneurs transmettant lesdits signaux audits actionneurs (6, 1006, 1006').

15. Interface de stimulation tactile selon l'une des revendications 1 à 14, dans laquelle la vitesse des ondes de flexion est de l'ordre de 50 m/s.

**Patentansprüche**

1. Taktile Stimulationsschnittstelle mit einem Element, das dazu bestimmt ist, von einem Nutzer durch Berührung abgetastet zu werden, wobei das Element, das durch Berührung abgetastet werden soll, aus zumindest einer Fläche, zumindest einem Betätigungsglied (6, 1006, 1006), das dazu bestimmt ist, eine Kraft auf die Fläche aufzubringen, und aus Steuereinrichtungen zum Steuern des zumindest einen Betätigungsglieds gebildet ist, wobei die Steuereinrichtungen dazu bestimmt sind, dem Betätigungsglied (6, 1006, 1006') Signale zu senden, die den auf die Fläche (4, 1004) aufgebrachten Kräften in Abhängigkeit von der an der Fläche zu erzeugenden taktilen Stimulation entsprechen,
wobei die Kräfte mit einem Zeitumkehrverfahren bestimmt werden, wobei die Fläche (4, 1004) zumindest einen Bereich enthält, so dass

$$\frac{c^3(\lambda)}{\rho\lambda} < 10^{13} \qquad \square\lambda \geq 2 \text{ cm}$$

- wobei $\lambda$ die Wellenlänge der Biegewellen ist, die sich in dem Bereich ausbreiten,
- c die Geschwindigkeit der Biegewellen ist,
- p die Masse pro Flächeneinheit des Bereichs ist, und

wobei das zumindest eine Betätigungsglied (6, 1006, 1006') eine Bandbreite hat, die sich zwischen 1 Hz und 20 kHz erstreckt, so dass eine große Anzahl von Eigenmodi der Fläche (4, 1004) erregt werden.

2. Taktile Stimulationsschnittstelle nach Anspruch 1, enthaltend zumindest einen Träger (2, 1002), der einen die Fläche haltenden Rahmen bildet, wobei das Betätigungsglied (6, 1006, 1006') in der Nähe des Rahmens liegt, wobei das Betätigungsglied (6) vorteilhaft eine Kraft direkt auf die Fläche senkrecht zu dieser aufbringt oder das Betätigungsglied (1006') vorteilhaft eine Kraft direkt auf den Träger (1002) aufbringt.

3. Taktile Stimulationsschnittstelle nach Anspruch 1, enthaltend einen rahmenförmigen Träger (1002), an dem die Fläche (1004) aufgehängt ist, zumindest ein erstes und ein zweites Betätigungsglied, wobei das erste Betätigungsglied (1006) eine Kraft direkt auf die Fläche (1004) aufbringt und das zweite Betätigungsglied (1006') eine Kraft auf den Träger (1002) aufbringt.

4. Taktile Stimulationsschnittstelle nach Anspruch 1, wobei die Fläche einen mit einem Druckmedium gefüllten, abgeschlossenen Raum eingrenzt, wobei die Fläche durch das Druckmedium verspannt ist, wobei die Schnittstelle einen Träger für den abgeschlossenen Raum und zumindest ein am Träger angebrachtes Betätigungsglied aufweist.

5. Taktile Stimulationsschnittstelle nach einem der Ansprüche 1 bis 4, enthaltend zumindest einen Sensor für einen Parameter, der dazu geeignet ist, die Wirkung der Kräfte auf die Fläche zu beeinflussen, und/oder zumindest einen Sensor zum Erfassen der Anwesenheit des Nutzers in Kontakt mit der Schnittstelle.

6. Taktile Stimulationsschnittstelle nach einem der Ansprüche 1 bis 5, wobei das Betätigungsglied (6) ein elektromagnetisches Betätigungsglied ist.

7. Taktile Stimulationsschnittstelle nach Anspruch 6 in Kombination mit einem der Ansprüche 2 bis 4, wobei das Betätigungsglied (6) eine Spule (6.1), einen Weicheisenkern und einen Magneten aufweist, wobei der Magnet (6.2) an die Fläche befestigt ist und die Spule (6.1) an den Träger befestigt ist.

8. Taktile Stimulationsschnittstelle nach einem der Ansprüche 1 bis 5, wobei das Betätigungsglied aus piezoelektrischem Material besteht, wobei das Betätigungsglied einen Balken aufweist, von dem ein Ende in den Träger eingelassen ist und das andere Ende dazu bestimmt ist, eine Kraft auf die Fläche aufzubringen.

9. Taktile Stimulationsschnittstelle nach einem der Ansprüche 1 bis 8, wobei die Fläche mit Zapfen verstehen ist, die dazu bestimmt sind, mit dem Nutzer in Kontakt zu treten und/oder wobei die Fläche zumindest zwei Materialien und/oder zwei Phasen aufweist, die unterschiedlich sind.

10. Taktile Stimulationsschnittstelle nach einem der Ansprüche 1 bis 9, wobei die Fläche transparent ist.

11. Taktile Stimulationsschnittstelle nach einem der Ansprüche 1 bis 10, wobei die Fläche zumindest eine Folie aus Polymermaterial, aus Verbundmaterial aufweist, wobei die Schnittstelle einen Träger aufweist, an dem die Fläche verspannt ist.

12. Taktile Stimulationsschnittstelle nach einem der Ansprüche 1 bis 10, wobei die Fläche zumindest eine Glasscheibe mit einer Dicke von etwa 100 $\mu$m enthält.

13. Taktile Stimulationsschnittstelle nach einem der Ansprüche 1 bis 12, wobei die Steuereinrichtungen eine modale Basis oder eine Basis von Impulsantworten aufweisen, wobei die Basis von Impulsantworten Signale enthält, die an das Betätigungsglied (6, 1006, 1006') zu übertragen sind, wobei die Signale durch das Zeitumkehrverfahren bestimmt wurden, oder die modale Basis eine Bestimmungseinheit (A) zum Bestimmen der an das Betätigungsglied (6, 1006, 1006') zu übertragenden Signale durch das Zeitumkehrverfahren aufweist.

14. Taktile Stimulationsschnittstelle nach einem der Ansprüche 1 bis 13, wobei die Steuereinrichtungen einen Kontroller für die Betätigungsglieder enthalten, der die Signale zu den Betätigungsgliedern (6, 1006, 1006') überträgt.

15. Taktile Stimulationsschnittstelle nach einem der Ansprüche 1 bis 14, wobei die Geschwindigkeit der Beigewellen in der Größenordnung von 50 m/s liegt.

**Claims**

1. Tactile stimulation interface comprising an element intended to be tactilely explored by an operator, said element intended to be tactilely explored being formed by at least one surface, at least one actuator (6, 1006, 1006') configured to apply a force on said surface, and means for controlling said at least one actuator, said control means being configured to send, to the actuator (6, 1006, 1006'), signals corresponding to the forces to be applied to said surface (4, 1004) according to the tactile stimulation to be generated on the surface, wherein said forces are determined by a time-reversal method, said surface (4, 1004) comprising at least one area such that:

$$\frac{c^3(\lambda)}{\rho\lambda} < 10^{13} \quad \forall \lambda \geq 2cm$$

- λ is the wavelength of the bending waves being propagated in said area,
- c is the speed of the bending waves,
- ρ is the mass per surface unit of said area, and

wherein said at least one actuator (6, 1006, 1006') has a bandwidth extending between 1 Hz and 20 kHz so as to excite a large number of modes specific to said surface (4, 1004).

2. Tactile stimulation interface according to claim 1, comprising at least one support (2, 1002) forming a frame holding the surface, said actuator (6, 1006, 1006') being located near the frame, the actuator (6) advantageously applying a force directly at the surface, perpendicularly to it or the actuator (1006') advantageously applying a force directly on the support (1002).

3. Tactile stimulation interface according to claim 1, comprising a support (1002) in the form of a frame from which the surface (1004) is suspended, at least one first and one second actuator, the first actuator (1006) applying a force directly on the surface (1004) and the second actuator (1006') applying a force on the support (1002).

4. Tactile stimulation interface according to claim 1, wherein the surface defines a closed volume filled with a pressurized fluid, said surface being stretched by the pressurized fluid, said interface comprising a support for said closed volume and at least one actuator mounted on the support.

5. Tactile stimulation interface according to one of claims 1 to 4, comprising at least one sensor of a parameter capable of influencing the effect of the forces on the surface or/and at least one sensor for detecting the presence of the operator in contact with the interface.

6. Tactile stimulation interface according to one of claims 1 to 5, in which the actuator (6) is an electromagnetic actuator.

7. Tactile stimulation interface according to claim 6 in combination with one of claims 2 to 4, wherein the actuator (6) comprises a coil (6.1), a soft iron core and a magnet, said magnet (6.2) being fixed on the surface and the coil (6.1) being fixed on the support.

8. Tactile stimulation interface according to one of claims 1 to 5, wherein the actuator is made of a piezoelectric material, the actuator compriing a beam, one end of which is built into the support and the other end of which is intended to apply a force on the surface.

9. Tactile stimulation interface according to one of claims 1 to 8, wherein the surface is equipped with pins intended to come into contact with the operator or/and wherein the surface is comprised of at least two different materials and/or two different phases.

10. Tactile stimulation interface according to one of claims 1 to 9, wherein the surface is transparent.

11. Tactile stimulation interface according to one of claims 1 to 10, wherein the surface is comprised of at least one film of a polymer material or a composite material, the interface comprising a support over which the surface is stretched.

12. Tactile stimulation interface according to one of claims 1 to 10, wherein the surface is comprised of at least one glass plate having a thickness of around 100 μm.

13. Tactile stimulation interface according to one of claims 1 to 12, wherein the control means comprise a modal base or an impulse response base, the impulse response base containing signals to be transmitted to the actuator (6, 1006, 1006'), said signals having been determined by the time-reversal method or the modal base being comprised of a unit for determining (A) signals to be transmitted to the actuator (6, 1006, 1006') by the time-reversal method.

14. Tactile stimulation interface according to one of claims 1 to 13, wherein the control means are comprised of an actuator controller transmitting said signals to said actuators (6, 1006, 1006').

15. Tactile stimulation interface according to one of claims 1 to 14, wherein the speed of the bending waves is on the order of 50 m/s.

FIG.1A

FIG.1B

FIG.1C

I2

104    104'

106

FIG.2

206    204

202

FIG.3

306    I3

302

FIG.4A

402

404    I4

406

402

FIG.4B

504

506

FIG.4C

I5

I6

FIG.4D

606

604

708 71<del>6</del>0

70<del>7</del>4

FIG.7A

812

814

804

FIG.7B

904

916    918   920

FIG.7C

FIG.5A
T=0,13 ms

FIG.5B
T=0,82 ms

FIG.5C
T=1,63 ms

FIG.5D
T=2,45 ms

FIG.5E
T=3.27 ms

FIG.5F
T=4,08 ms

FIG.5G
T=4,90 ms

FIG.5H
T=5,72 ms

FIG.5I
T=6,53 ms

FIG.5J
T=7,35 ms

FIG.5K
T=7,62 ms

FIG.5L
T=8,17 ms

# FIG.6A

T=0,13 ms

# FIG.6B

T=1,58 ms

# FIG.6C

T=3,17 ms

# FIG.6D

T=4,75 ms

# FIG.6E

T=6,33 ms

# FIG.6F

T=7,91 ms

# FIG.6G

T=9,50 ms

# FIG.6H

T=11,08 ms

# FIG.6I

T=12,66 ms

# FIG.6J

T=14,02 ms

# FIG.6K

T=15,16 ms

# FIG.6L

T=15,77 ms

FIG.8A

FIG.8B

I (x,y,t)

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100225596 A
- EP 2372505 A
- EP 2381338 A

**Littérature non-brevet citée dans la description**

- **BENALI-KHOUDJA ; M. HAFEZ ; J. M. ALEXANDRE ; A. KHEDDAR.** Tactile interfaces: a state of the art survey. *Proc. International Symposium on Robotics,* 2004
- **M. R. BAI ; Y. K, TSAI.** *Impact localization combined with haptic feedback for touch panel applications based on the time-reversal approach,* 2011
- *The Journal of the Acoustical Society of America,* vol. 129 (3), 1297-1305